# EUROPÄISCHE PATENTSCHRIFT

(11) **EP 1 422 165 B1**
(45) Veröffentlichungstag und Bekanntmachung des Hinweises auf die Patenterteilung: **15.02.2006**
(21) Anmeldenummer: 03022758.1
(22) Anmeldetag: 10.10.2003
(51) Int. Cl.: B65D 81/38, A47J 41/00, B29C 44/18

(54) **Hohlkörper, insbesondere Thermobehälter**
Hollow body, in particular insulated container
Corps creux, en particulier conteneur isolant

(30) Priorität: 14.10.2002 DE 10247884
(43) Veröffentlichungstag der Anmeldung: 26.05.2004
(73) Patentinhaber: HUBER, ERICH, 77740 BAD PETERSTAL (DE); SCHÖLLHORN, MARCELLUS, 77871 RENCHEN (DE)
(72) Erfinder: HUBER, ERICH, 77740 BAD PETERSTAL (DE); SCHÖLLHORN, MARCELLUS, 77871 RENCHEN (DE)
(74) Vertreter: Neymeyer, Franz

(56) Entgegenhaltungen:
- DE-A- 4 133 926
- DE-U- 7 441 188
- DE-U- 8 810 591
- GB-A- 2 147 989
- US-A- 5 787 839

## Beschreibung

Die Erfindung betrifft einen Hohlkörper bestehend aus einem ersten Schalenkörper und einem zweiten Schalenkörper, welche im Bereich ihrer umlaufenden, einander benachbarten Endkanten dicht miteinander verbunden sind und zwischen sich einen Hohlraum einschließen, welcher mit einer aushärtenden Isoliermasse ausgeschäumt ist.

Hohlkörper der gattungsgemäßen Art können beispielsweise als Thermobehälter ausgebildet sein, wie dies aus der DE 201 09 502 U1 bekannt ist. Solche Thermobehälter dienen in der Regel zur kurzzeitigen Lagerung und zum Transport von Nahrungsmitteln. Dazu ist ein solcher Hohlkörper wannenartig ausgebildet und weist einen doppelwandigen Aufbau auf. Zur doppelwandigen Ausgestaltung ist ein erster Schalenkörper und ein zweiter Schalenkörper vorgesehen, welche im Bereich ihrer umlaufenden, benachbarten Endkanten dicht miteinander verbunden sind. Um eine thermische Isolationswirkung zu erreichen bilden diese beiden Schalenkörper einen Hohlraum, welcher mit einer aushärtenden Isoliermasse wie beispielsweise Polyurethanschaum ausgeschäumt sind. Eine solche Isoliermasse hat die Eigenschaft, während des Schäumvorganges zu expandieren und den zwischen den Schalenkörpern eingeschlossenen Hohlraum vollständig auszufüllen. Während dieses Schäumvorganges, insbesondere nachdem der Hohlraum zwischen den Schalenkörpern vollständig ausgeschäumt ist, erhöht sich der Innendruck im Hohlraum und die Isoliermasse härtet aus, so daß ein formstabiler, isolierender Hohlkörper beispielsweise eben in der Form eines solchen Thermobehälters entsteht.

Zur Herstellung eines solchen Hohlkörpers werden zunächst die beiden Schalenkörper beispielsweise im Tiefziehverfahren hergestellt. Als Werkstoff kommen hier in der Regel Kunststoffe in Frage. Diese schalenkörper werden vor dem Zusammensetzen zur eigentlichen Behälterwandung zunächst in Werkzeugaufnahmen eingebracht, in welchen sie mit ihrer kompletten Außenkontur flächig anliegen. Diese Werkzeugaufnahmen weisen dazu eine entsprechende innere Formgebung auf, welche der äußeren Form der beiden Schalenkörper entspricht. Für jeden Schalenkörper ist dabei eine eigene Werkzeugaufnahme vorgesehen. Zur Halterung der flächig in den Werkzeugaufnahmen anliegenden Schalenkörpern wird ein Vakuum zwischen der Werkzeugaufnahme und den Schalenkörpern angelegt, so daß diese in die Werkzeugaufnahme angesaugt sind.

Bevor nun diese beiden Werkzeugaufnahmen passend aufeinander gelegt und miteinander verspannt werden, wird in den einen Schalenkörper eine entsprechend vorher bestimmte Menge an aushärtender Isoliermasse, wie beispielsweise Polyurethanschaum eingebracht. Anschließend werden die beiden Werkzeugaufnahme aufeinander gelegt und miteinander verspannt, so daß diese unverrückbar aufeinander liegen. In diesem Zustand liegen die Endkanten der beiden Schalenkörper benachbart zueinander und berühren sich in der Regel. Mit einer gewissen Verzögerung tritt nun die Reaktion der Isoliermasse ein, so daß diese aufschäumt und ihr Volumen vergrößert. Am Ende des Schäumvorganges ist der Hohlraum zwischen den Schalenkörpern bei korrekter wahl der Menge an Isoliermasse vollständig ausfüllt. Um bei dieser Volumenvergrößerung des Polyurethanschaumes die auftretenden Überdrücke aufzufangen, dienen die beiden Werkzeugaufnahmen, durch welche die Schalenkörper stabil in ihrer Form abgestützt werden.

Des weiteren sind in den Werkzeugaufnahmen kleine Entlüftungskanäle vorgesehen, so daß die im Hohlraum überschüssig vorhandene Luft im Bereich der Endkanten der Schalenkörper entweichen kann. Nachdem der Polyurethanschaum nunmehr den Hohlraum zwischen den Schalenkörpern vollständig ausgefüllt hat und sich nicht mehr weiter ausdehnen kann, findet unter einem Druck von ca. 4 bis 6 bar eine Verdichtung des Polyurethanschaumes statt. Während dieses Verdichtungsvorganges tritt eine geringfügige Haftung des Polyurethanschaumes mit der Innenwand der beiden Schalenkörper auf. Diese Verbindung ist jedoch nicht ausreichend, um die beiden Schalenkörper absolut festsitzend aneinander zu halten. Außerdem ist im Verbindungsbereich nach dem Entformen bzw. nach dem Entfernen der Werkzeugaufnahmen eine dichte Verbindung der einander benachbarten Endkanten noch nicht gewährleistet.

Somit werden, um diese beiden Schalenkörper miteinander dicht zu verbinden, diverse Schweiß- oder Klebverfahren eingesetzt, um eine Verbindung herzustellen. Da insbesondere dann, wenn die Endkanten der beiden Schalenkörper stumpf aufeinander stoßen, solche Verbindungen zwischen diesen Endkanten nur schwer, ohne einen Materialverzug der Schalenkörper herzustellen ist, sind Behälter bekannt, bei welchem in einem Bereich der Längskanten des Behälters selbst diese einander benachbarten Endkanten rechtwinklig über die eigentliche Behälterwand nach außen hinaus stehen. Diese Bereiche liegen dabei planeben aufeinander, so daß diese anschließend ohne einen erheblichen Verzug der Schalenkörper miteinander verschweißt werden können.

Solche Verbindungsarten sind beispielsweise auch aus der DE 41 33 926 A1 bekannt, in welcher ein Isolierbehälter beschrieben wird, der aus einer Innenwand und einer Außenwand besteht, welche die beiden Schalenkörper bilden. Auch die hier vorgeschlagenen Verbindungsarten erfordern stets einen weiteren Arbeitsgang, um die beiden Schalenkörper fest miteinander zu verbinden, wobei die Dichtigkeit, je nach Verbindungsart, nur bedingt gewährleistet ist.

Die DE 195 41 412 C1 offenbart ein Verfahren zur Herstellung eines wärmedämmenden Verbundprofils. Hier werden zwei Profilschienen über Isolierstege entlang ihrer Längskanten miteinander verbunden. Die Isolierstege sind in U-förmige Aufnahmenuten der Profilschienen einsteckt. Diese Aufnahmenuten werden nach dem Einstecken der Isolierstege verpreßt, so daß eine klemmende Verbindung entsteht.

In der DE 35 37 061 C2 ist ein Gehäuse für Kühlgeräte beschrieben, dessen isolierenden Wände aus einem inneren Schalenkörper und von im Abstand dazu angeordneten Teilen einer Außenverkleidung gebildet werden. Der innere Schalenkörper ist mit einem seine Öffnung umgebenden Flansch versehen, auf dessen Rand Teile der Außenverkleidung aufsteckbar sind. Hier ist eine dichte Verbindung zwischen der mehrteiligen Außenverkleidung und dem Schalenkörper nicht vorgesehen. Wollte man eine solche jedoch erreichen, so wären auch hier zusätzliche Maßnahmen, wie Kleben oder Schweißen notwendig.

Es zeigt sich, daß bei den herkömmlichen Behältern insbesondere die Abdichtung des mit Isoliermasse ausgeschäumten Hohlraumes nur aufwendig zu bewerkstelligen ist, zumindest aber einen weiteren Arbeitsgang bei der Herstellung eines solchen Hohlkörpers erfordert. Da nun aber für bestimmte Anwendungsfälle, wie z.B. bei Thermobehältern für Lebensmittel, eine absolute Dichtheit des Hohlkörpers zwingend vorgeschrieben ist, war es bisher stets erforderlich einen solchen zusätzlichen Arbeitsgang durchzuführen.

Demzufolge liegt der Erfindung die Aufgabe zu Grunde, einen Behälter der gattungsgemäßen Art derart auszugestalten, daß dieser insbesondere in einem einzigen Arbeitsgang dicht hergestellt werden kann.

Die Aufgabe wird erfindungsgemäß zusammen mit den Merkmalen des Oberbegriffes des Patentanspruches 1 dadurch gelöst, daß zwischen den einander benachbarten Endkanten der beiden Schalenkörper eine formstabile, umlaufende Profilleiste vorgesehen ist, die zur Aufnahme der Endkanten zwei im Querschnitt U-förmig ausgebildete Profilabschnitte mit jeweils einem innen im Hohlraum liegenden und einem außen am jeweiligen Schalenkörper anliegenden Profilschenkel aufweist und,
daß der jeweils innere Profilschenkel im Bereich der jeweiligen Endkante zusammen mit dem jeweiligen Schalenkörper einen Zwischenraum bildet, welcher mit dem Hohlraum über einen verengten Zufuhrspalt oder einen verengten Zufuhrkanal in Verbindung steht, über welchen während des Schäumvorganges Isoliermasse in den Zwischenraum gelangt und den Zwischenraum vollständig ausfüllt.

Durch die erfindungsgemäße Ausgestaltung des Hohlkörpers mit seinen beiden Schalenkörpern und der umlaufenden, zwischen den Endkanten dieser Schalenkörper vorgesehenen Profilleiste ist eine Herstellung eines absolut dichten Hohlkörpers in einem einzigen Arbeitsgang durchführbar.

Dazu ist vorgesehen, daß zwischen den einander benachbarten Endkanten der beiden Schalenkörper eine formstabile, umlaufende Profilleiste angeordnet ist. Diese Profilleiste weist zwei im Querschnitt U-förmig ausgebildete Profilabschnitte auf, welche zur Aufnahme jeweils einer der Endkanten der beiden Schalenkörper dient. D.h., daß die Schalenkörper mit ihren Endkanten jeweils in eines der U-förmig ausgebildeten Profilabschnitte der Profilleiste einsteckbar sind. Dabei bilden diese Profilabschnitte jeweils einen innen im Hohlraum liegenden und eine außen am Schalenkörper anliegenden Profilschenkel. Der jeweils innere Profilschenkel bildet im Bereich der jeweiligen Endkante eines Schalenkörpers zusammen mit dem Schalenkörper im Bereich dieser Endkante einen Zwischenraum, welcher mit dem Hohlraum, der durch die aufeinander gesetzten Schalenkörper definiert ist, über einen verengten Zufuhrspalt oder einen verengten Zufuhrkanal in Verbindung steht. D.h., daß der innere Profilschenkel nicht an der jeweiligen Endkante des jeweiligen Schalenkörpers anliegt, sondern zu diesem einen gewissen Abstand aufweist, wobei der vorgesehene, umlaufende Zufuhrspalt oder Zufuhrkanal im Vergleich zu diesem Abstand zwischen dem jeweiligen Profilschenkel verengt ausgebildet ist.

Über diesen im Querschnitt verengten Zufuhrspalt oder den alternativ dazu verengten Zufuhrkanal ist nun während des Schäumvorganges Isoliermasse wie beispielsweise Polyurethanschaum in den Zwischenraum zuführbar, so daß am Ende des Schäumvorganges dieser Zwischenraum zwischen dem inneren Profilschenkel und der jeweiligen Endkante des jeweiligen Schalenkörpers vollständig ausgefüllt ist. Dieses Einströmen der Isoliermasse in den Zwischenraum wird durch eine Druckerhöhung im Hohlraum des Hohlkörpers bewirkt. Diese Druckerhöhung auf ca. 4 bis 6 bar findet spätestens dann statt, wenn die Isoliermasse auf Grund ihrer Ausdehnungsreaktion den Hohlraum zwischen den Schalenkörpern vollständig ausgefüllt und damit eine weitere Ausdehnung nur noch über den Zufuhrspalt oder Zufuhrkanal in den Zwischenraum zwischen Profilschenkel und Schalenkörper möglich ist.

Ist nun dieser Zwischenraum ebenfalls vollständig mit Isoliermasse gefüllt, so steigt auch im Zwischenraum der Druck ebenfalls an, wobei gleichzeitig mit dieser Druckerhöhung die "Aushärtung" der Isoliermasse beginnt. Mit dieser Aushärtung wird die Fließfähigkeit der Isoliermasse geringer, so daß auf Grund der verengten Ausbildung des Zufuhrspaltes oder des Zufuhrkanales ein "Zurückfließen" der Isoliermasse in den Hohlraum des Hohlkörpers weitestgehend blockiert ist. Dies wiederum bewirkt eine weitere, erhebliche Druckerhöhung im Zwischenraum, welche weit größer ist als die Druckerhöhung im Hohlraum des Hohlkörpers.

Mit dieser Druckerhöhung wiederum geht einerseits eine starke Verdichtung der Isoliermasse einher und andererseits wird die Isoliermasse zumindest teilweise zwischen den jeweils äußeren Profilschenkel und die Endkante des jeweiligen Schalenkörpers gepreßt, wo wiederum eine weitere Verdichtung des Isoliermasse bewirkt wird. Damit bildet nun am Ende der Reaktionszeit der Isoliermasse auf Grund der erfindungsgemäßen Ausgestaltung der Profilleiste und der Endkanten der Schalenkörper diese Isoliermasse eine weitestgehend homogenisierte Masse, welche gleichzeitig für die absolute Dichtheit zwischen der Profilleiste und den Schalenkörpern sorgt. Auf Grund des hohen Druckes wird auch gleichzeitig eine Klebwirkung der Isoliermasse zwischen der Profilleiste und der entsprechend eingesteckten Endkante der Schalenkörper bewirkt, so daß nach Abschluß des Schäumvorganges und vollständigem Aushärten der Isoliermasse eine absolut dichte und formstabile Verbindung zwischen der Profilleiste und den Schalenkörpern erreicht wird.

Gemäß Anspruch 2 können die Wandabschnitte der Schalenkörper im Bereich ihrer umlaufenden Endkanten jeweils einen im Querschnitt verjüngt ausgebildeten Montagesteg aufweisen, mit welchen diese Endkanten der Schalenkörper jeweils in den zugeordneten U-förmigen Profilabschnitt der Profilleiste hinein ragen. Durch diese Ausgestaltung wird eine gewisse Vergrößerung des Zwischenraumes erreicht, so daß auch sicher Isoliermaterial beim Schäumvorgang in diesen hineingelangen kann. Wäre der Zwischenraum zu klein ausgestaltet, so bestünde die Gefahr, daß die Aushärtung im Zwischenraum beschleunigt erfolgt, so daß die gewünschte Homogenisierung und Druckerhöhung nur unzureichend stattfindet.

Gemäß Anspruch 3 kann weiterhin vorgesehen sein, daß die inneren Profilschenkel im Querschnitt keilförmig ausgebildet sind und sich über die jeweilige Höhe des Montagesteges erstrecken. Dabei wird der Zufuhrspalt etwa im stufenförmigen Übergangsbereich zwischen dem Montagesteg und dem übrigen Wandanschnitt des jeweiligen Schalenkörpers bzw. dessen Endkante gebildet. Einerseits wird durch diese Ausgestaltung ein definierter Zufuhrspalt erreicht und andererseits auf Grund der keilförmigen Ausbildung des inneren Profilschenkels das einströmen des Isoliermaterial zur Trennebene zwischen den beiden Schalenkörpern hin nach außen umgelenkt, so daß eine vollständige Füllung des Zwischenraumes sicher gewährleistet ist.

Weitere vorteilhafte Ausgestaltungen sind den weiteren Unteransprüchen entnehmbar.

So kann gemäß Anspruch 4 vorgesehen sein, daß die inneren Profilschenkel mit parallel zu den Wandabschnitten verlaufenden Verlängerungsabschnitten versehen sind, welche in Verbindung mit den Wandabschnittes die verengten Zufuhrkanäle bilden. Durch diese Ausgestaltung wird der Widerstand für das Zurückströmen der Isoliermasse aus dem Zwischenraum erhöht, wodurch die Verdichtung im Zwischenraum verbessert wird.

Gemäß Anspruch 5 kann vorgesehen sein, daß die Oberflächenstruktur der Profilleist und/oder der Schalenkörper derart ausgebildet ist, daß zwischen den äußeren Profilschenkeln und den Außenflächen der zugeordneten Wandabschnitte ein Kapillarspalt gebildet wird. Durch diese Ausgestaltung wird das Einpressen der Isoliermasse zwischen die äußeren Profilschenkel und den Schalenkörper begünstigt, so daß auch die Dichtwirkung verbessert wird.

Gemäß Anspruch 6 kann vorgesehen sein, daß die Profilleiste mit ihrem einen Profilabschnitt an einem der Schalenkörper durch einen punktuell aufgebrachten Kleber, insbesondere durch einen Heißkleber vor dem Zusammenfügen der Schalenkörper zusammen mit der Profilleiste vorfixiert ist. Durch diese Ausgestaltung wird die Herstellung des Hohlkörpers vereinfacht, insbesondere die gewünschte Ausrichtung der Profilleiste gegenüber den Schalenkörpern sichergestellt.

Gemäß Anspruch 7 kann vorgesehen sein, daß zum Zusammenfügen der Schalenkörper zusammen mit der Profilleiste zwei zusammenfügbare Werkzeugaufnahmen vorgesehen sind, in welchen je einer der Schalenkörper passend aufgenommen ist. Durch diese Ausgestaltung wird insbesondere eine Deformierung der Schalenkörper bei Schäumvorgang und der damit verbunden Druckerhöhung im Hohlraum sicher verhindert.

Gemäß Anspruch 8 kann vorgesehen sein, daß jede der Werkzeugaufnahmen im Bereich der Endkante eines aufgenommenen Schalenkörpers mit einer umlaufenden Aussparung versehen ist, in welcher die Profilleiste beim Fügevorgang passend aufgenommen ist. Durch diese Ausgestaltung wird ein absolut korrekter Sitz der Profilleiste beim Schäumvorgang gewährleistet.

Gemäß Anspruch 9 kann vorgesehen sein, daß die Wandabschnitte im Bereich mit ihren Endkanten und der zwischen diesen angeordneten Profilleiste einen Stumpfstoß bilden und zusammen mit den Profilabschnittes der Profilleiste fluchtend oder unter einem stumpfen Winkel zueinander verlaufend angeordnet sind. Diese Ausgestaltung vereinfacht insbesondere das "Aufeinandersetzen" der beiden Schalenkörper.

Anhand der Zeichnung wird nachfolgend die Erfindung näher erläutert. Die Erfindung ist dabei nicht auf die konkret dargestellten Ausführungsbeispiele beschränkt, sondern umfaßt sämtliche Merkmalskombinationen der Patentansprüche. Es zeigt:
- Fig. 1: eine der umlaufenden Kontur der Schalenkörper in ihrer Form angepaßte Profilleiste in Draufsicht;
- Fig. 2: einen Teilschnitt II-II der Profilleiste aus Fig. 1;
- Fig. 3: einen Vertikalschnitt durch einen erfindungsgemäßen Hohlkörper in Form eines Thermobehälters mit zwei Schalenkörpern, sowie der Profilleiste aus Fig. 1;
- Fig. 4: einen vergrößerten Ausschnitt IV in Bereich der Profilleiste aus Fig. 3.

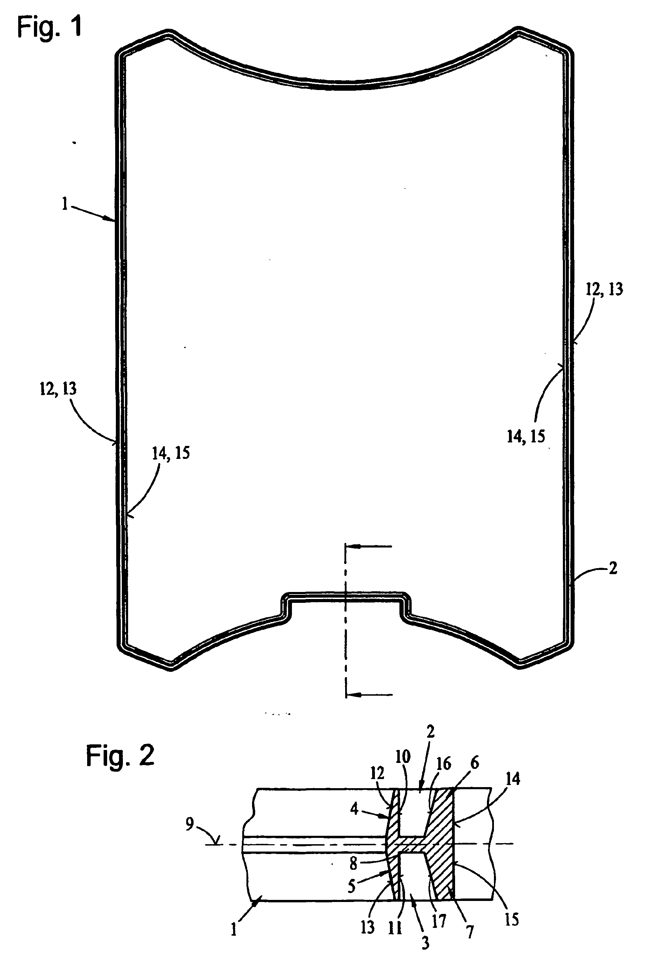

Fig. 1 zeigt eine Profilleiste 1 der erfindungsgemäßen Art, welche, wie dies insbesondere aus Fig.2 ersichtlich ist, zwei U-förmig ausgebildete Profilabschnitte 2 und 3 aufweist. Diese beiden Profilabschnitte 2 und 3 liegen beim vorliegenden Ausführungsbeispiel der Profilleiste 1 einander spiegelsymmetrisch gegenüber, so daß der in Fig. 2 obere Profilabschnitt 2 nach oben und der untere Profilabschnitt 3 nach unten offen ist. Diese Profilabschnitte 2 und 3 werden außenseitig jeweils durch einen äußeren Profilschenkel 4 bzw. 5 und nach innen durch einen inneren Profilschenkel 6 bzw. 7 begrenzt. Diese Profilschenkel 4 und 6 bzw. 5 und 7 sind durch einen gemeinsamen Mittelsteg 8 miteinander verbunden, welcher in der gemeinsamen Symmetrieebene 9 der Profilleiste 1 liegt.

Wie weiter aus Fig. 2 ersichtlich ist, verläuft die jeweilige Innenwand 10 bzw. 11 der äußeren Profilschenkel 4 bzw. 5 im wesentlichen rechtwinklig zur Symmetrieebene 9, während die jeweilige Außenwand 12 bzw. 13 des jeweiligen Profilschenkels 4 bzw. 5 ausgehend von der Symmetrieebene 9 zur zugehörigen Innenwand 10 bzw. 11 hin geneigt verlaufen. Durch diese Ausgestaltung wird insbesondere im fertig montierten Zustand beispielsweise eines Behälters ein optisch gefälliges Erscheinungsbild erreicht.

Die beiden inneren Profilschenkel 6 und 7 weisen eine rechtwinklig zur Symmetrieebene 9 in einer gemeinsamen Vertikalebene liegende Außenwand 14 bzw. 15 auf, mit welchen die Profilleiste 1 im montierten Zustand im Hohlraum eines aus zwei Schalenkörpern gebildeten Hohlkörpers liegen.

Diesen Außenwänden 14 und 15 der beiden Profilschenkel 6 und 7 ist eine entsprechende Innenwand 16 bzw. 17 zugeordnet, welche ausgehend von der Symmetrieebene 9 schräg geneigt zur jeweils zugehörigen Außenwand 14 bzw. 15 verlaufen. Wie aus Fig.2 weiter ersichtlich ist, sind die beiden Profilschenkel 6 und 7 in ihrem Querschnitt wesentlich stärker ausgebildet, so daß diese beim Schäumvorgang und bei einer Druckerhöhung in diesen U-förmig ausgebildeten Profilabschnitten 2 und 3 im wesentlichen nicht plastisch oder elastisch nachgeben. Als Werkstoff für diese Profilleiste 1 kommen hier die üblicher Weise beispielsweise bei der Herstellung von Thermobehältern verwendeten Kunststoffe in Betracht.

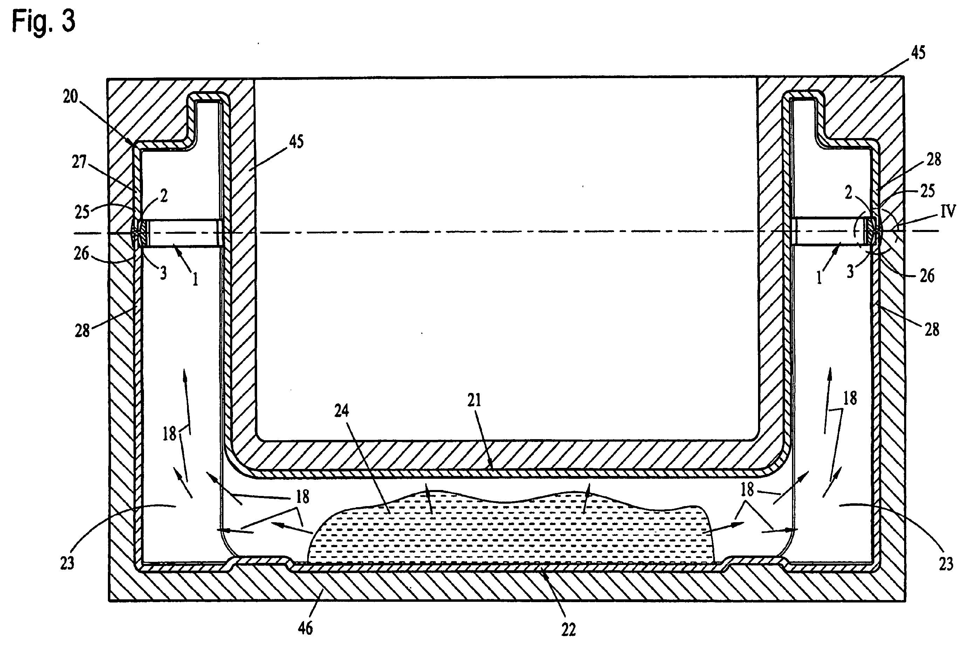

Ein solcher Hohlkörper ist in Fig. 3 beispielhaft als Thermobehälter 20 ausgebildet und in Fig.3 im vertikal Schnitt dargestellt.

Dieser Thermobehälter 20 besteht beim vorliegenden Ausführungsbeispiel aus einem ersten, inneren Schalenkörper 21 und einem zweiten äußeren Schalenkörper 22. Diese beiden Schalenkörper 21 und 22 bilden zusammen in zusammengesetzten Zustand gemäß der Fig.3 einen wannenartigen Aufnahmebehälter. Solche Thermobehälter, wie dieser in Fig. 3 beispielhaft dargestellt ist, dienen beispielsweise zur temperierten Aufnahme von Nahrungsmitteln. Dabei schließen die beiden Schalenkörper 21 und 22 einen Hohlraum 23 ein, welcher im fertigen Endzustand mit einer Isoliermasse 24, wie Polyurethanschaum vollständig ausgefüllt ist. In Fig. 3 ist diese Isoliermasse 24 im Zustand vor deren Expansion dargestellt. Während des Schäumvorganges dehnt sich diese Isoliermasse 24 in Richtung der Pfeile 18 im wesentlichen gleichmäßig aus, bis der Hohlraum 23 vollständig ausgefüllt ist.

Wie aus Fig. 3 weiter ersichtlich ist, stehen die beiden Schalenkörper 21 und 22 über die Profilleiste 1 mit einander in Verbindung. Hierzu weisen die beiden Schalenkörper 21 und 22 jeweils eine gemäß der Formgebung der Profilleiste 1 aus Fig. 1 umlaufende Endkante 25 bzw. 26 auf, welche den jeweiligen Endabschnitt der beim vorliegenden Ausführungsbeispiel vertikal verlaufenden Wandabschnitte 27 bzw. 28 der Schalenkörper 21 und 22 bilden. Wie aus Fig. 3 weiter ersichtlich ist, verlaufen die beiden Wandabschnitte 27 und 28 fluchtend zueinander und sind umlaufend in den beiden U-förmig ausgebildeten Profilabschnitt 2 und 3 der Profilleiste 1 aufgenommen.

Weiter ist aus Fig. 3 erkennbar, daß in dem dargestellten Zustand unmittelbar vor dem Schäumvorgang, die Schalenkörper 21 und 22 in passend aufeinandersetzbare Werkzeugaufnahmen 45 und 46 eingesetzt sind. Durch diese Werkzeugaufnahmen 45 und 46 wird verhindert, daß sich die Schalenkörper 21 und 22 beim Schäumvorgang und der damit einhergehenden Druckerhöhung im Hohlraum 23 ungewollt verformen können.

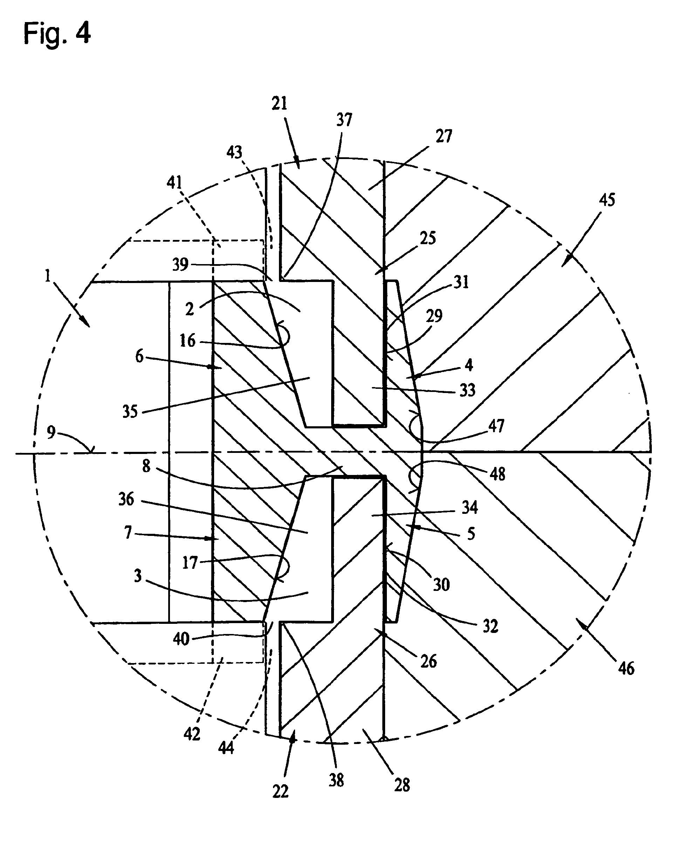

Fig. 4 zeigt einen vergrößerten Ausschnitt IV aus Fig. 3, aus welchem erkennbar ist, das der Wandabschnitt 27 in den Profilabschnitt 2 und der Wandabschnitt 28 in den Profilabschnitt 3 der Profilleiste 1 eingesteckt ist. In dieser in Fig. 4 fertig montierten und ausgeschäumten Position liegt dabei die Profilleiste 1 mit seinen beiden äußeren Profilschenkeln 4 und 5 eben, flächig an der jeweils zugeordneten Außenfläche 29 bzw. 30 der Endkanten 25 bzw. 26 des jeweiligen Schalenkörpers 21 bzw. 22 an. Auf Grund der formstabilen Ausführung sowohl der Profilleiste 1 als auch der Schalenkörper 21 und 22 wird zwischen diesen Profilschenkeln 4, 5 sowie dem Mittelsteg 8 der Profilleiste 1 und den aufgenommenen Endkanten 25 und 26 der beiden Schalenkörper 21 und 22 eine Art Kapillarspalt 31 bzw. 32 gebildet.

Wie weiter aus Fig. 4 ersichtlich ist, weisen die Wandabschnitte 27 und 28 der Schalenkörper 21 und 22 im Bereich ihrer umlaufenden Endkanten 25 und 26 jeweils einen im Querschnitt verjüngt ausgebildeten Montagesteg 33 bzw. 34 auf, mit welchem diese vollständig in den jeweils zugeordneten Profilabschnitt 2 bzw. 3 der Profilleiste 1 hinein ragen. Die beiden inneren Profilschenkel 6 und 7 der Profilleiste 1 bilden im Bereich dieser Montagestege 33 und 34 einen Zwischenraum 35 bzw. 36, in welchen am Ende des Schäumvorganges stark verdichtetes Isoliermaterial vorgesehen ist, welches aus Gründen der Übersichtlichkeit in Fig. 4 nicht dargestellt ist.

Auf Grund der Ausgestaltung der Profilleiste 1 mit seinen inneren Profilschenkeln 6 und 7 mit deren schräg verlaufenden Wänden 16 und 17, wird zwischen den stufenförmigen Übergangsbereich 37 und 38 der Wandabschnitte 27 und 28 und den inneren Profilschenkeln 6 und 7 ein Zufuhrspalt 39 gebildet, durch welchen hindurch beim Ausschäumvorgang Isoliermasse aus dem Hohlraum 23 in die Zwischenräume 35 und 36 gelangt und diese Hohlräume 35 und 36 vollständig ausfüllt. Dabei können die Endbereiche der inneren Profilschenkel 6 und 7 auch jeweils mit einem parallel zu den Wandabschnitten 27 und 28 verlaufenden Verlängerungsabschnitt 41 bzw. 42 versehen sein, so daß zwischen den zugeordneten Wandabschnitten 27 und 28 und diesen in Fig. 4 gestrichelt dargestellten Verlängerungsabschnitten 41 und 42 ein im Querschnitt im Vergleich zum jeweiligen Zwischenraum 35 bzw. 36 verengter Zufuhrkanal 43 bzw. 44 gebildet wird.

Durch diese besondere Ausgestaltung einerseits der Wandabschnitte 27 und 28 im Bereich deren Endkanten 25 und 26 sowie der Profilleiste 1 mit ihren inneren Profilschenkeln 6 und 7 sowie ihren äußeren Profilschenkeln 4 und 5 wird erreicht, daß nachdem die Zwischenräume 35 und 36 mit entsprechender Isoliermasse gefüllt sind, sich auf Grund der weiteren Reaktion dieser Isoliermasse deren Fließfähigkeit verändert und geringer wird. Dies hat wiederum zu Folge, daß die Isoliermasse, welche sich in den Zwischenräumen 35 und 36 befindet nicht mehr durch die Zufuhrspalte 39, 40 bzw. die Zufuhrkanäle 43 und 44 zurück in den Hohlraum 23 fließen kann. Dadurch wird eine erhebliche Erhöhung des Druckes in den Zwischenräumen 35 und 36 erreicht, wodurch die Isoliermasse auch in die beiden Kapillarspalte 31 und 32 zwischen dem Mittelsteg 8, den äußeren Profilabschnitten 3 und 4 und der ebenen Außenfläche 29, 30 der Profilleiste 1 unter weiterer Verdichtung hinein gepreßt wird. Auf Grund dieser hohen Drücke und der weiteren Verdichtung entsteht über die hoch verdichtete Isoliermasse in den Kapillarspalten 29 und 30 wie aber auch in den beiden Zwischenräumen 35 und 36 und den Endkanten 25 und 26 wie aber auch zur gesamten Profilleiste 1 eine Klebverbindung, so daß diese Art der Verbindung durch die nicht dargestellt Isoliermasse vollständig abgedichtet ist.

Weiter ist aus Fig. 4 erkennbar, daß die beiden Werkzeugaufnahmen 45 und 46 im Bereich der Profilleiste 1 jeweils mit einer Aussparung 47 bzw. 48 versehen sind, in welchen die Profilleiste 1 mit ihren außen liegenden Profilschenkeln 4 und 5 passend aufgenommen wird. Somit wird einerseits eine Deformierung der Wandabschnitte 27 und 28 sicher verhindert und andererseits ein absolut korrekter Sitz der Profilleiste 1 gewährleistet.

Auf Grund der oben beschriebenen Druckerhöhung und Verdichtung der Isoliermasse in den Zwischenräumen 35 und 36, welche durch die Formgestaltung sowohl der Endkanten 25 und 26 der Schalenkörper 21 und 22 wie auch der Profilleiste 1 erreicht wird, ist somit eine dichte Verbindung zwischen den Schalenkörpern 21 und 22 in einem einzigen Arbeitsgang während des Schäumvorganges erreichbar.

Für die Vereinfachung der Herstellung vor dem Schäumvorgang kann dabei auch vorgesehen sein, daß die Profilleiste 1 bspw. am äußeren Schalenkörper 22 bzw. dessen Endkante 26 punktuell durch eine Klebverbindung fixiert wird, um vor dem aufeinandersetzen der beiden Schalenkörper 21 und 22 eine definierte Positionierung der Endkanten 25 und 26 in den Profilabschnitten 2 und 3 sicher zustellen.

Somit ist zusammenfassend festzustellen, daß die Ausgestaltung der Endkanten 25 und 26 zusammen mit der Ausgestaltung der Profilabschnitte 2 und 3 mit ihren Profilschenkeln 4 und 5 sowie 6 und 7 eine Verdichtung der Isoliermasse im Zwischenraum 35 und 36 bewirken, da die Isoliermasse auf Grund ihrer mit zunehmender Reaktionszeit stets geringer werdenden Fließfähigkeit in den Zwischenräumen 35 und 36 aus diesen durch die Zufuhrspalte 39 und 40 nicht wieder zurück in den Hohlraum 23 zurück gelangen kann. Dadurch wird wiederum eine erhebliche Druckerhöhung in den Zwischenräumen 35 und 36 bewirkt, so daß einerseits die Isoliermasse selbst verdichtet und andererseits in die Kapillarspalte 31 und 32 unter weiterer Verdichtung eingepreßt wird. Weiter wird auf Grund der hohen Drücke sowohl in den Zwischenräume 35 und 36 als auch in den Kapillarspalten 31, 32 eine Klebverbindung zwischen der Profilleiste 1 und den Endkanten 25 und 26 der Schalenkörper 21 und 22 bewirkt.

Es versteht sich dabei, daß die Erfindung nicht auf die konkrete im Ausführungsbeispiel dargestellte Ausführungsform sowohl dieser Endkanten 25 und 26 als auch der Profilleiste 1 beschränkt ist. Wesentlich ist hier, daß diese Querschnittsformen sowohl der Profilleiste 1 als auch der Endkante 25 und 26 dahingehend gestaltet sind, daß beim Ausschäumvorgang einerseits sicher Isoliermasse wie bspw. Polyurethanschaum, in die Zwischenräume 35 und 36 gelangen kann, dort weiter verdichtet wird und auf Grund der geringer werdenden Fließfähigkeit dort ein Druckaufbau bewirkt wird. Einerseits bildet damit die sich erheblich verdichtende Isoliermasse selbst eine Art Dichtstreifen in den Zwischenräumen 35 und 36 einerseits und andererseits wird auch eine Klebverbindung zwischen dieser Isoliermasse und der Profilleiste 1 und den Endkanten 25 und 26 insbesondere im Bereich der Kapillarspalte 31 und 32 erreicht, so daß diese Verbindung absolut dicht in einem Arbeitsgang herstellbar ist.

Eine solche Dichtheit wird beispielsweise auf dem Gebiet der Lebensmitteltechnologie verlangt, da Thermobehälter zum Transport und zur Aufbewahrung von Lebensmitteln, wie diese beispielsweise bei Fernküchen und dergleichen verwendet werden, vom Gesetzgeber verlangt ist, da in den Hohlraum 23 bzw. in den darin befindlichen Schaumkörper 24 aus hygienischen Gründen keinerlei Feuchtigkeit eindringen darf. Solche Thermobehälter wie Fig. 3 beispielhaft nur die "Wanne" dargestellt ist, müssen beispielsweise "spülmaschinenfest" sein, was durch die erfindungsgemäße Ausgestaltung sicher erreichbar ist.

Dabei müssen auch die Wandabschnitte 27 und 28 nicht zwingend fluchtend zueinander verlaufen, sondern können auch eine gewisse Neigung zueinander aufweisen. Dem entsprechend sind auch die Formgebungen der zugehörigen Profilleisten anzupassen, so daß letztendlich stets im Prinzip die in Fig. 4 dargestellte Ausführungsform Bereichsweise erreicht ist.

## Patentansprüche

1. Hohlkörper (20) bestehend aus einem ersten Schalenkörper (21) und einem zweiten Schalenkörper (22), welche im Bereich ihrer umlaufenden, einander benachbarten Endkanten (25, 26) dicht miteinander verbunden sind und zwischen sich einen Hohlraum (23) einschließen, welcher mit einer aushärtenden Isoliermasse (24) ausgeschäumt ist,
**dadurch gekennzeichnet,**
**daß** zwischen den einander benachbarten Endkanten (25, 26) der beiden Schalenkörper (21, 22) eine formstabile, umlaufende Profilleiste (1) vorgesehen ist, die zur Aufnahme der Endkanten (25, 26) zwei im Querschnitt U-förmig ausgebildete Profilabschnitte (2, 3) mit jeweils einem innen im Hohlraum (23) liegenden und einem außen am jeweiligen Schalenkörper (21, 22) anliegenden Profilschenkel (6, 7 bzw. 4, 5) aufweist und, daß der jeweils innere Profilschenkel (6, 7) im Bereich der jeweiligen Endkante (25, 26) zusammen mit dem jeweiligen Schalenkörper (21, 22) einen Zwischenraum (35, 36) bildet, welcher mit dem Hohlraum (23) über einen verengten Zufuhrspalt (39, 40) oder einen verengten Zufuhrkanal (43, 44) in Verbindung steht, über welchen während des Schäumvorganges Isoliermasse (24) in den Zwischenraum (35, 36) gelangt und den Zwischenraum (35, 36) vollständig ausfüllt.

2. Hohlkörper nach Anspruch 1, **dadurch gekennzeichnet, daß** die Wandabschnitte (27, 28) der Schalenkörper (21, 22) im Bereich ihrer umlaufenden Endkanten (25, 26) jeweils einen im Querschnitt verjüngt ausgebildeten Montagesteg (33, 34) aufweisen, mit welchem die Endkanten (25, 26) jeweils in den zugeordneten U-förmigen Profilabschnitt (2, 3) der Profilleiste (1) hinein ragen.

3. Hohlkörper nach Anspruch 2, **dadurch gekennzeichnet, daß** die inneren Profilschenkel (6, 7) im Querschnitt keilförmig ausgebildet sind und sich über die jeweilige Höhe des jeweils aufgenommenen Montagesteges (33, 34) erstrecken und im stufenförmigen Übergangsbereich (37, 38) zwischen dem Montagesteg (33, 34) und dem übrigen Wandabschnitt (27, 28) den Zufuhrspalt (39, 40) bilden.

4. Hohlkörper nach Anspruch 2, **dadurch gekennzeichnet, daß** die inneren Profilschenkel (6, 7) mit parallel zu den Wandabschnitten (27, 28) verlaufenden Verlängerungsabschnitten (41, 42) versehen sind, welche in Verbindung mit den Wandabschnittes (27, 28) die verengten Zufuhrkanäle (43, 44) bilden.

5. Hohlkörper nach einem der Ansprüche 1 bis 4, **dadurch gekennzeichnet, daß** die Oberflächenstruktur der Profilleist und/oder der Schalenkörper (21, 22) derart ausgebildet ist, daß zwischen den äußeren Profilschenkeln (4, 5) und den Außenflächen (29, 30) der zugeordneten Wandabschnitte (27, 28) ein Kapillarspalt (31, 32) gebildet wird.

6. Hohlkörper nach einem der Ansprüche 1 bis 5, **dadurch gekennzeichnet, daß** die Profilleiste (1) mit ihrem einen Profilabschnitt (2 oder 3) an einem der Schalenkörper (21, 22) durch einen punktuell aufgebrachten Kleber, insbesondere durch einen Heißkleber vor dem Zusammenfügen der Schalenkörper (21, 22) zusammen mit der Profilleiste (1) vorfixiert ist.

7. Hohlkörper nach einem der Ansprüche 1 bis 6, **dadurch gekennzeichnet, daß** zum Zusammenfügen der Schalenkörper (21, 22) zusammen mit der Profilleiste (1) zwei zusammenfügbare Werkzeugaufnahmen (45, 46) vorgesehen sind, in welchen je einer der Schalenkörper (21, 22) passend aufgenommen ist.

8. Hohlkörper nach Anspruch 7, **dadurch gekennzeichnet, daß** jede der Werkzeugaufnahmen (45, 46) im Bereich der Endkante (25, 26) eines aufgenommenen Schalenkörpers (21, 22) mit einer umlaufenden Aussparung (47, 48) versehen ist, in welcher die Profilleiste (1) beim Fügevorgang passend aufgenommen ist.

9. Hohlkörper nach einem der Ansprüche 1 bis 8, **dadurch gekennzeichnet, daß** die Wandabschnitte (27, 28) im Bereich mit ihren Endkanten (25, 26) und der zwischen diesen angeordneten Profilleiste (1) einen Stumpfstoß bilden und zusammen mit den Profilabschnittes (2, 3) der Profilleiste (1) fluchtend oder unter einem stumpfen Winkel zueinander verlaufend angeordnet sind.

## Claims

1. Hollow body (20) consisting of a first shell body (21) and a second shell body (22), which are closely connected to one another in the region of their peripheral adjacent end edges (25, 26) and between them enclose a cavity (23), which is foamed-filled with a curing insulating compound (24), **characterised in that** a dimensionally stable, peripheral profiled strip (1) is provided between the adjacent end edges (25, 26) of the two shell bodies (21, 22), which, to receive the end edges (25, 26), has two profiled sections (2, 3) formed in a U-shape in cross-section each with one profiled leg (6, 7 or 4, 5) located inside in the cavity (23) and one profiled leg (6, 7 or 4, 5) resting on the outside on the respective shell body (21, 22) and, **in that** the respective inner profiled leg (6, 7) forms an interstice (35, 36) in the region of the respective end edge (25, 26) together with the respective shell body (21, 22), which interstice is connected to the cavity (23) via a restricted feed gap (39, 40) or a restricted feed channel (43, 44), via which, during the foaming process, insulating compound (24) arrives in the interstice (35, 36) and completely fills up the interstice (35, 36).

2. Hollow body according to claim 1, **characterised in that** the wall sections (27, 28) of the shell bodies (21, 22), in the region of their peripheral end edges (25, 26), each have an assembly web (33, 34) which is tapered in cross-section, with which the end edges (25, 26) project, in each case, into the associated U-shaped profiled section (2, 3) of the profiled strip (1).

3. Hollow body according to claim 2, **characterised in that** the inner profiled legs (6, 7) are wedge-shaped in cross-section and extend over the respective height of the respectively received assembly web (33, 34) and form the feed gap (39, 40) in the step-shaped transition region (37, 38) between the assembly web (33, 34) and the remaining wall section (27, 28).

4. Hollow body according to claim 2, **characterised in that** the inner profiled legs (6, 7) are provided with extension sections (41, 42) extending parallel to the wall sections (27, 28), which extension sections form the restricted feed channels (43, 44) in conjunction with the wall sections (27, 28).

5. Hollow body according to any one of claims 1 to 4, **characterised in that** the surface structure of the profiled strip and/or the shell bodies (21, 22) is formed in such a way that a capillary gap (31, 32) is formed between the outer profiled legs (4, 5) and the outer faces (29, 30) of the associated wall sections (27, 28).

6. Hollow body according to any one of claims 1 to 5, **characterised in that** the profiled strip (1) with its profiled section (2 or 3), is prefixed to one of the shell bodies (21, 22) by an adhesive applied point-wise, in particular by a hotmelt adhesive, prior to the joining of the shell bodies (21, 22) together with the profiled strip (1).

7. Hollow body according to any one of claims 1 to 6, **characterised in that** to join the shell bodies (21, 22) together with the profiled strip (1), two joinable mould receivers (45, 46) are provided, in which one of the shell bodies (21, 22), in each case, is received so as to fit.

8. Hollow body according to claim 7, **characterised in that** each of the mould receivers (45, 46) in the region of the end edge (25, 26) of a received shell body (21, 22) is provided with a peripheral recess (47, 48), in which the profiled strip (1) is received so as to fit during the joining process.

9. Hollow body according to any one of claims 1 to 8, **characterised in that** the wall sections (27, 28) in the region with their end edges (25, 26) and the profiled strip (1) arranged between them, form a butt joint and, together with the profiled section (2, 3) of the profiled strip (1), are arranged flush or running at an obtuse angle with respect to one another.

## Revendications

1. Corps creux (20) composé d'une première coque (21) et d'une seconde coque (22) qui sont assemblées de façon étanche dans la zone de leur arêtes d'extrémité (25, 26) périphériques adjacentes l'une à l'autre, et renferment entre elles une cavité (23) qui est remplie d'une masse isolante (24) en mousse durcissante, **caractérisé en ce qu'**entre les arêtes d'extrémité (25, 26) adjacentes l'une à l'autre est prévue une baguette profilée périphérique rigide (1) qui, pour recevoir les arêtes d'extrémité (25, 26), présente deux segments profilés de section en U (2, 3) dont une aile (6, 7) est chaque fois située à l'intérieur de la cavité (23) et l'autre aile (4, 5) est appliquée à l'extérieur contre la coque correspondante (21, 22), et **en ce que** l'aile (6, 7) du profilé qui se situe chaque fois à l'intérieur forme, dans la zone de l'arête d'extrémité (25, 26), avec la coque associée (21, 22), un intervalle (35, 36) qui communique avec la cavité (23) par l'intermédiaire d'une fente de remplissage rétrécie (39, 40) ou d'un conduit de remplissage rétréci (43, 44) par le biais duquel (de laquelle) de la masse isolante (24) pénètre dans l'intervalle (35, 36) pendant le processus de moussage et remplit entièrement ledit intervalle (35, 36).

2. Corps creux selon la revendication 1, **caractérisé en ce que** les segments de paroi (27, 28) des coques (21, 22) présentent chacun dans la zone de leurs arêtes d'extrémité (25, 26) périphériques une aile de montage (33, 34) dont la section transversale va en se rétrécissant, à l'aide de laquelle les arêtes d'extrémité (25, 26) s'encastrent ou s'étendent dans le segment profilé de section en U associé (2, 3) de la baguette profilée (1).

3. Corps creux selon la revendication 2, **caractérisé en ce que** les ailes intérieures (6, 7) du profilé présentent une section transversale cunéiforme, s'étendent sur la hauteur de chaque aile de montage (33, 34) qui y est logée et forment dans la zone de transition étagée (37, 38), entre l'aile de montage (33, 34) et le segment de paroi restant (27, 28), la fente de remplissage (39, 40).

4. Corps creux selon la revendication 2, **caractérisé en ce que** les ailes intérieures (6, 7) du profilé sont dotées de segments prolongateurs (41, 42) s'étendant parallèlement aux segments de paroi (27, 28), qui forment en relation avec les segments de paroi (27, 28) les conduits de remplissage rétrécis (43, 44).

5. Corps creux selon l'une des revendications 1 à 4, **caractérisé en ce que** la structure superficielle de la baguette profilée et/ou des coques (21, 22) est réalisée de telle sorte qu'entre les ailes extérieures (4, 5) du profilé et les surfaces extérieures (29, 30) des segments de paroi associés (27, 28), il se forme une fente capillaire (31, 32).

6. Corps creux selon l'une des revendications 1 à 5, **caractérisé en ce que** la baguette profilée (1) est préalablement fixée par l'un de ses segments profilés (2 ou 3) à l'une des coques (21, 22) à l'aide de colle appliquée ponctuellement, notamment d'une colle adhésive à chaud, avant l'assemblage des coques (21, 22) et de la baguette profilée (1).

7. Corps creux selon l'une des revendications 1 à 6, **caractérisé en ce que** pour assembler les coques (21, 22) et la baguette profilée (1), deux porte-outils (45, 46) sont prévus, qui peuvent être assemblés et dans lesquels chacune des coques (21, 22) est logée avec un ajustement précis.

8. Corps creux selon la revendication 7, **caractérisé en ce que** chacun des porte-outils (45, 46) est doté, dans la zone de l'arête d'extrémité (25, 26) d'une coque (21, 22) qui y est logée, d'un évidement (47, 48) qui s'étend sur tout le pourtour, dans lequel la baguette profilée (1) est logée avec un ajustement précis lors de l'assemblage.

9. Corps creux selon l'une des revendications 1 à 8, **caractérisé en ce que** les segments de paroi (27, 28) forment dans la zone de leurs arêtes d'extrémité (25, 26) et de la baguette profilée (1) placée entre ces dernières un joint plat ou abouté et sont disposés dans l'alignement des segments profilés (2, 3) de la baguette profilée (1) ou en formant les uns par rapport aux autres un angle obtus.
